# EUROPÄISCHE PATENTANMELDUNG

(11) **EP 4 368 691 A1**
(43) Veröffentlichungstag der Anmeldung: **15.05.2024**
(21) Anmeldenummer: 23189927.9
(22) Anmeldetag: 07.08.2023
(51) Int. Cl.: C11D 3/37, C11D 3/386, C11D 11/00

(54) **WASCHMITTELZUBEREITUNG MIT VERBESSERTEN EIGENSCHAFTEN**

(30) Priorität: 09.11.2022 DE 102022211873
(71) Anmelder: Henkel AG & Co. KGaA, 40589 Düsseldorf (DE)
(72) Erfinder: Vockenroth, Inga Kerstin, 40227 Düsseldorf (DE); Tkacz, Piotr, 40789 Monheim am Rhein (DE); Düffels, Arno, 40479 Düsseldorf (DE)

(57) **Zusammenfassung**

Waschmittelzubereitung, enthaltend, bezogen auf ihr Gesamtgewicht,
a) Hexosaminidase Zubereitung;
b) 0,5 bis 10 Gew.-% eines polyalkoxylierten Amins mit einem gewichtsmittleren Molekulargewicht M_{w} im Bereich von 600 g/mol bis 10000 g/mol, das erhältlich ist durch Umsetzung von Ammoniak oder primären Alkyl- oder Hydroxyalkylaminen, die ein Molekulargewicht unter 200 g/mol aufweisen, mit Alkylenoxiden
und Textilwaschverfahren unter Einsatz dieser Waschmittelzubereitung.

## Beschreibung

Die Anmeldung betrifft eine Enzym- und Amin-haltige Waschmittelzubereitung. Weiterhin betrifft die Anmeldung ein Verfahren zum Waschen von Textilien unter Verwendung der Waschmittelzubereitung.

An die Konfektions- und Angebotsformen von Wasch- und Reinigungsmittel werden sich kontinuierlich ändernde Anforderungen gestellt. Ein Hauptaugenmerk liegt dabei seit geraumer Zeit auf der bequemen Dosierung von Wasch- und Reinigungsmitteln durch den Verbraucher und der Vereinfachung der zur Durchführung eines Wasch- oder Reinigungsverfahren notwendigen Arbeitsschritte. Eine technische Lösung bieten vorportionierte Wasch- oder Reinigungsmittel, beispielsweise Folienbeutel mit einer oder mehreren Aufnahmekammern für feste oder flüssige Wasch- oder Reinigungsmittel.

Ein für die Herstellung dieser Folienbeutel relevanter Trend, ist die Miniaturisierung dieser Folienbeutel. Hintergrund dieser Entwicklung sind neben einer höheren Verbraucherakzeptanz aufgrund vereinfachter Handhabung insbesondere Nachhaltigkeitsaspekte, beispielsweise in Bezug auf Transportvolumina und -kosten und die Menge der eingesetzten Verpackungsmittel.

Die Aufkonzentration moderner Waschmittel setzt eine fortschreitende Optimierung bestehender Waschmittelrezepturen und die Entwicklung neuer, leistungsfähigerer Waschmittelrezepturen voraus. Ein Ziel dieser Entwicklungen, bei denen in der Regel auf bekannte wasch- oder reinigungsaktive Wirkstoffe zurückgegriffen wird, ist es, bei gleichbleibender oder verringerter Dosiermenge eine Waschkraftsteigerung der Waschmittelrezepturen zu erreichen. In Bezug auf bleichbare Verschmutzungen soll dabei aus Gründen der Nachhaltigkeit vorzugsweise auf den Einsatz von Bleichmitteln verzichtet werden. Zur Gruppe der bekannten wasch- oder reinigungsaktive Wirkstoffe zählen beispielsweise die Hexosamimidasen und die tensidisch wirksamen alkoxylierten Alkanolamine.

Hexosaminidase-haltige Textilwaschmittel werden beispielsweise in der internationalen Patentanmeldung WO 2019/086520 A1 beschrieben.

In der europäischen Anmeldung EP 3 617 299 A1 werden wasch- oder reinigungsaktive Wirkstoffe aus der Gruppe der aminobasierten Alkoxylate beschrieben.

Der Anmeldung lag die Aufgabe zugrunde, leistungsstarke Waschmittelzubereitungen bereitzustellen, welche in einfacher und effizienter Weise herstellbar sind, eine gute Lagerfähigkeit sowie eine gute Primär- und Sekundärwaschwirkung insbesondere eine gute Reinigungswirkung an bleichbaren Anschmutzungen aufweisen und vorzugsweise in konzentrierter Form in wasserlöslichen Folienbeuteln konfektionierbar sind.

Ein erster Anmeldungsgegenstand ist eine Waschmittelzubereitung, enthaltend, bezogen auf ihr Gesamtgewicht,
a) Hexosaminidase Zubereitung;
b) 0,5 bis 10 Gew.-% eines polyalkoxylierten Amins mit einem gewichtsmittleren Molekulargewicht M_{w} im Bereich von 600 g/mol bis 10000 g/mol, das erhältlich ist durch Umsetzung von Ammoniak oder primären Alkyl- oder Hydroxyalkylaminen, die ein Molekulargewicht unter 200 g/mol aufweisen, mit Alkylenoxiden.

Die Waschmittelzubereitung ist vorzugsweise unter Standardbedingungen (20°C, 1013 mbar) fließfähig.

Überraschenderweise weist die Kombination einer Hexosaminidase mit spezifischen Mengen eines spezifischen polyalkoxylierten Polyalkylenamins eine synergistische Wirkung in Bezug auf die Reinigung von textilen Oberflächen, insbesondere auf die Reinigung von Baumwolltextilien auf.

Als ersten fakultativen Bestandteil enthalten die Waschmittelzubereitungen eine Hexosaminidase Zubereitung.

Der Begriff "Hexosaminidase" bezeichnet ein Polypeptid mit Hexosaminidase-Aktivität (Hexosaminidasen) und schließt Enzyme mit ein, welche die Hydrolyse von N-Acetyl-D-hexosamin-oder N-Acetyl-glucosamin-Polymeren katalysieren.

Polypeptide mit Hexosaminidase-Aktivität schließen Dispersine wie Dispersin B (DspB) ein, bei denen es sich um β-N-Acetylglucosamininidasen handelt, die zur Glycosid-Hydrolase-20-Familie gehören. Dispersine werden vom Parodontalerreger Aggregatibacter actinomycetemcomitans, einem gramnegativen oralen Bakterium, produziert. Dispersin B ist eine β-Hexosaminidase, die spezifisch β-1,6-glykosidische Bindungen von Acetylglucosamin-Polymeren hydrolysiert. Der Einsatz von Hexosaminidasen aus der Gruppe der β-Hexosaminidasen ist bevorzugt.

Hinsichtlich ihrer Reinigungsleistung besonders vorteilhafte Waschmittelzubereitungen enthalten, bezogen auf ihr Gesamtgewicht, 0,01 bis 5 Gew.-%, vorzugsweise 0,1 bis 4 Gew.-% und insbesondere 0,15 bis 2,5 Gew.-% Hexosaminidase Zubereitung.

Die Waschmittelzubereitung kann neben der zuvor beschriebenen Hexosaminidase-Zubereitung eine oder mehrere weitere Enzymzubereitungen enthalten. Aufgrund ihrer verbesserten Reinigungswirkung werden Waschmittelzubereitungen bevorzugt, die bezogen auf ihr Gesamtgewicht, 0,2 bis 8 Gew.-%, vorzugsweise 0,5 bis 6 Gew.-% Enzymzubereitung enthalten.

Eine Enzymzubereitung umfasst neben dem eigentlichen Enzymprotein weitere Bestandteile wie Enzymstabilisatoren, Trägermaterialien oder Füllstoffe. Das Enzym-Protein bildet dabei üblicherweise nur einen Bruchteil des Gesamtgewichts der Enzymzubereitung. Bevorzugt eingesetzte Enzymzubereitungen enthalten zwischen 0,1 und 40 Gew.-%, bevorzugt zwischen 0,2 und 30 Gew.-%, stärker bevorzugt zwischen 0,4 und 20 Gew.-% und am stärksten bevorzugt zwischen 0,8 und 10 Gew. % des Enzymproteins. In solchen Zusammensetzungen kann ein Enzymstabilisator in einer Menge von 0,05 bis 35 Gew.-%, bevorzugt von 0,05 bis 10 Gew.-%, bezogen auf das Gesamtgewicht in der Enzymzusammensetzung, enthalten sein.

Die Proteinkonzentration kann mit Hilfe bekannter Methoden, zum Beispiel dem BCA-Verfahren (Bicinchoninsäure; 2,2'-Bichinolyl-4,4'-dicarbonsäure) oder dem Biuret-Verfahren bestimmt werden. Die Bestimmung der Aktivproteinkonzentration erfolgt diesbezüglich über eine Titration der aktiven Zentren unter Verwendung eines geeigneten irreversiblen Inhibitors (für Proteasen beispielsweise Phenylmethylsulfonylfluorid (PMSF)) und Bestimmung der Restaktivität.

Es ist bevorzugt, wenn die Waschmittelzubereitung mindestens eine Enzym-Zubereitung, vorzugweise mindestens 3 Enzymzubereitungen von Enzymen aus der Gruppe Lipase, Amylase, Protease, Cellulase, Zubereitungen eines pektinolytischen Enzyms und Endoglucanase enthält.

Es ist erfindungsgemäß bevorzugt, wenn die Waschmittelzubereitung mindestens eine Lipase-Zubereitung enthält. Erfindungsgemäß bevorzugte Lipasen werden ausgewählt aus mindestens einem Enzym der Gruppe, die gebildet wird aus Triacylglycerol-Lipase (E.C. 3.1.1.3), und Lipoprotein-Lipase (E.C. 3.1.1.34) und Monoglycerid-Lipase (E.C. 3.1.1.23).

Erfindungsgemäß bevorzugte Lipasen-Zubereitungen sind die von dem Unternehmen Amano Pharmaceuticals unter den Bezeichnungen Lipase M-AP10^{®}, Lipase LE^{®} und Lipase F^{®} (auch Lipase JV^{®}) vertriebenen Handelsprodukte. Die Lipase F^{®} ist beispielsweise natürlicherweise in Rhizopus oryzae vorhanden. Die Lipase M-AP10^{®} ist beispielsweise natürlicherweise in Mucor javanicus vorhanden.

Eine höchst bevorzugte Lipase ist kommerziell unter dem Handelsnamen Lipex^{®} von dem Unternehmen Novozymes (Dänemark) zu beziehen und vorteilhaft in den erfindungsgemäßen Waschmittelzubereitungen einsetzbar. Besonders bevorzugt ist hierbei die Lipase Lipex^{®} 100 L.

Bevorzugte Waschmittelzubereitungen sind dadurch gekennzeichnet, dass sie, bezogen auf ihr Gesamtgewicht 0,01 bis 1 Gew.-%, insbesondere von 0,05 bis 0,3 Gew.-%, Lipase-Zubereitung enthalten.

Die Waschmittelzubereitungen enthalten vorzugsweise mindestens eine Amylase, insbesondere eine α-Amylase. α-Amylasen (E.C. 3.2.1.1) hydrolysieren als Enzym interne α-1,4-glycosidische Bindungen von Stärke und stärkeähnlichen Polymeren. Beispielhaft können die α-Amylasen aus Bacillus licheniformis, aus B. amyloliquefaciens und aus B. stearothermophilus sowie deren für den Einsatz in Wasch- oder Reinigungsmitteln verbesserte Weiterentwicklungen genannt werden. Das Enzym aus B. licheniformis ist von der Firma Novozymes unter der Handelsbezeichnung Termamyl^{®} und von der Firma Genencor unter der Handelsbezeichnung Purastar^{®}ST erhältlich. Weiterentwicklungsprodukte dieser α-Amylasen sind von der Firma Novozymes unter den Handelsnamen Duramyl^{®} und Termamyl^{®}ultra, von der Firma Genencor unter dem Namen Purastar^{®}OxAm und von der Firma Daiwa Seiko Inc., Tokyo, Japan, als Keistase^{®} erhältlich. Die α-Amylase von B. amyloliquefaciens wird von der Firma Novozymes unter dem Namen BAN^{®} vertrieben, und abgeleitete Varianten von der α-Amylase aus B. stearothermophilus unter den Namen BSG^{®} und Novamyl^{®}, ebenfalls von der Firma Novozymes. Beispiele für α-Amylasen aus anderen Organismen sind die unter den Handelsnamen Fungamyl^{®} von der Firma Novozymes erhältlichen Weiterentwicklungen der α-Amylase aus Aspergillus niger und A. oryzae.

Der Gewichtsanteil der Amylase-Zubereitung, insbesondere der Amylase-Zubereitung am Gesamtgewicht der Waschmittelzubereitung beträgt vorzugsweise 0,1 bis 2 Gew.-%, insbesondere 0,2 bis 1 Gew.-%.

Es ist erfindungsgemäß bevorzugt, wenn in der Waschmittelzubereitung als Enzym mindestens eine Protease enthalten ist. Eine Protease ist ein Enzym, das Peptidbindungen mittels Hydrolyse spaltet. Jedes der Enzyme aus der Klasse E.C. 3.4 fällt erfindungsgemäß darunter (umfassend jede der darunterfallenden dreizehn Unterklassen). "Proteaseaktivität" liegt erfindungsgemäß vor, wenn das Enzym proteolytische Aktivität besitzt (EC 3.4). Verschiedenartige Proteaseaktivitäts-Typen sind bekannt: Die drei Haupttypen sind: Trypsin-artig, wobei eine Spaltung des Amidesubstrates nach den Aminosäuren Arg oder Lys bei P1 erfolgt; Chymotrypsin-artig, wobei eine Spaltung nach einer der hydrophoben Aminosäuren bei P1 erfolgt; und Elastase-artig, wobei eine Spaltung des Amidsubstrates nach Ala bei P1 erfolgt.

Überraschenderweise wurde festgestellt, dass eine Protease vom Typ der alkalischen Protease aus Bacillus lentus DSM 5483 oder eine hierzu hinreichend ähnliche Protease (bezogen auf die Sequenzidentität), die mehrere dieser Veränderungen in Kombination aufweist, besonders für den Einsatz in der erfindungsgemäßen Waschmittelzubereitungen geeignet und darin vorteilhafterweise verbessert stabilisiert wird. Vorteile des Einsatzes dieser Protease ergeben sich somit insbesondere hinsichtlich der Waschleistung und/oder der Stabilität.

Ganz besonders bevorzugt, enthält die erfindungsgemäße Waschmittelzubereitung Protease vom Typ der alkalischen Protease aus Bacillus lentus DSM 5483 oder eine hierzu hinreichend ähnliche Protease (bezogen auf die Sequenzidentität), die mehrere dieser Veränderungen in Kombination aufweist,

Der Gewichtsanteil der Protease-Zubereitung am Gesamtgewicht der Waschmittelzubereitung beträgt vorzugsweise, 0,2 bis 3 Gew.-%, vorzugsweise 0,4 bis 2 Gew.-%.

Bevorzugte Waschmittelzubereitungen enthalten als optionalen Bestandteil, bezogen auf ihr Gesamtgewicht, weiterhin 0,05 bis 2 Gew.-%, vorzugsweise 0,1 bis 0,4 Gew.-% einer Zubereitung eines pektinolytischen Enzyms.

Zu den pektinolytischen Enzymen werden im Rahmen der vorliegenden Erfindung Enzyme gezählt mit den Bezeichnungen Pektinase, Pektatlyase, Pektinesterase, Pektindemethoxylase, Pektinmethoxylase, Pektinmethylesterase, Pektase, Pektinmethylesterase, Pektinoesterase, Pektinpektylhydrolase, Pektindepolymerase, 20 Endopolygalacturonase, Pektolase, Pektinhydrolase, Pektin-Polygalacturonase, Endo-Polygalacturonase, Poly-α-1,4-Galacturonid Glycanohydrolase, Endogalacturonase, Endo-D-galacturonase, Galacturan 1,4-α-Galacturonidase, Exopolygalacturonase, Poly(galacturonat) Hydrolase, Exo-D-Galacturonase, Exo-D-Galacturonanase, Exopoly-DGalacturonase, Exo-poly-α-Galacturonosidase, Exopolygalacturonosidase oder 25 Exopolygalacturanosidase. Ganz besonders bevorzugt ist der Einsatz von Pektatlyasen.

Innerhalb der EC-Klassifikation der Enzyme, dem numerischen Klassifikationssystem für Enzyme, sind die pektinolytischen Enzyme insbesondere zugehörig zu den Enzymklassen (engl. "Enzyme Commission number") EC 3.1.1.11, EC 3.2.1.15, EC 3.2.1.67 und EC 3.2.1.82 und zählen folglich zur dritten der sechs Enzymhauptklassen, den 10 Hydrolasen (E.C.3. hierunter zu den Glycosylasen (E.C. 3.2.-.-) und wiederum hierunter zu den Glycosidasen (E.C. 3.2.1.-), d.h. Enzymen, die O- und/oder S-Glycosyl-Verbindungen hydrolysieren. Pektinolytische Enyzme wirken folglich insbesondere gegen Rückstände auf Geschirr, die Pektinsäure und/oder andere Galakturonane enthalten, und katalysieren deren Hydrolyse.

Pektatlyasen im Sinne der Erfindung sind Enzyme, welche die nichthydrolytische Spaltung von Pektat nach einem Endo-Mechanismus katalysieren.

Beispiele für geeignete pektinolytische Enzyme sind die unter den Handelsbezeichnungen Gamanase^{®}, Pektinex AR^{®}, X-Pect^{®} oder Pectaway^{®} von dem Unternehmen Novozymes, unter dem Handelsbezeichnungen Rohapect UF^{®}, Rohapect TPL^{®}, Rohapect PTE100^{®}, Rohapect MPE^{®}, 30 Rohapect MA plus HC, Rohapect DA12L^{®}, Rohapect 10L^{®}, Rohapect B1L^{®} von dem Unternehmen AB Enzymes und unter der Handelsbezeichnung Pyrolase^{®} von dem Unternehmen Diversa Corp., San Diego, CA, USA erhältlichen Enzyme und Enzym-Zubereitungen.

Als bevorzugten Bestandteil enthält die Waschmittelzubereitung, 0,01 bis 1 Gew.-%, vorzugsweise 0,02 bis 0,3 Gew.-% einer Mannanase-Zubereitung.

Eine Mannanase katalysiert die Hydrolyse von 1 ,4-beta-D- mannosidischen Bindungen in Mannanen, Galactomannanen, Glucomannanen und Galactoglucomannanen. Besagte Mannanasen werden gemäß Enzym Nomenklatur als E.C. 3.2.1.78 klassifiziert.

Als weiteren bevorzugten fakultativen Bestandteil enthalten die Waschmittelzubereitungen eine Cellulase-Zubereitung. Für Cellulasen können synonyme Begriffe verwendet werden, insbesondere Endoglucanase, Endo-1 ,4-beta-Glucanase, Carboxymethylcellulase, Endo-1 ,4-beta- D-Glucanase, beta-1 ,4-Glucanase, beta-1 ,4-Endoglucanhydrolase, Celludextrinase oder Avicelase. Entscheidend dafür, ob ein Enzym eine Cellulase im Sinne der Erfindung ist, ist deren Fähigkeit zur Hydrolyse von 1 ,4-ß-D-glucosidischen Bindungen in Cellulose.

Erfindungsgemäß geeignete Cellulasen (Endoglucanasen, EG) umfassen beispielsweise pilzliche, Endoglucanase(EG)-reiche Zusammensetzungen, welche von dem Unternehmen Novozymes unter dem Handelsnamen Celluzyme^{®} angeboten werden. Die ebenfalls von dem Unternehmen Novozymes erhältlichen Produkte Endolase^{®} und Carezyme^{®} basieren auf der 50 kD-EG, beziehungsweise der 43 kD-EG aus Humicola insolens DSM 1800. Weitere einsetzbare Handelsprodukte dieses Unternehmens sind Cellusoft^{®}, Renozyme^{®} und Celluclean^{®}. Weiterhin einsetzbar sind beispielsweise Cellulasen, die von dem Unternehmen AB Enzymes, Finnland, unter den Handelsnamen Ecostone^{®} und Biotouch^{®} erhältlich sind, und die zumindest zum Teil auf der 20 kD-EG aus Melanocarpus basieren. Weitere Cellulasen von dem Unternehmen AB Enzymes sind Econase^{®} und Ecopulp^{®}. Weitere geeignete Cellulasen sind aus Bacillus sp. CBS 670.93 und CBS 669.93, wobei die aus Bacillus sp. CBS 670.93 von dem Unternehmen Danisco/Genencor unter dem Handelsnamen Puradax^{®} erhältlich ist. Weitere verwendbare Handelsprodukte des Unternehmens Danisco/Genencor sind "Genencor detergent cellulase L" und IndiAge^{®}Neutra.

Der Gewichtsanteil der Cellulase-Zubereitung am Gesamtgewicht der Waschmittelzubereitung beträgt vorzugsweise 0,01 bis 1 Gew.-%, vorzugsweise 0,05 bis 0,3 Gew.-%.

Als weiteren fakultativen Bestandteil enthält die Waschmittelzubereitung neben der Hexosaminidase-Zubereitung ein spezifisches polyalkoxyliertes Amin mit einem Gewichtsanteil von 0,5 bis 10 Gew.-%. Bevorzugte Waschmittelzubereitungen enthalten, bezogen auf ihr Gesamtgewicht, 1 bis 9 Gew.-%, vorzugsweise 1,5 bis 7,5 Gew.-% polyalkoxyliertes Amin.

Entsprechende Gewichtsanteile haben sich für die Lagerfähigkeit insbesondere jedoch für die Reinigungsleistung als vorteilhaft erwiesen.

Bevorzugte polyalkoxylierte Amine weisen ein gewichtsmittleres Molekulargewicht M_{w} im Bereich von 1300 g/mol bis 6000 g/mol, insbesondere von 1400 g/mol bis 4500 g/mol auf. (Bei den hier und später gegebenenfalls für andere Polymere angegebenen mittleren Molekulargewichten handelt es sich um gewichtsmittlere Molekulargewichte M_{w}, die grundsätzlich mittels Gelpermeationschromatographie mit Hilfe eines RI-Detektors bestimmbar sind, wobei die Messung zweckmäßig gegen einen externen Standard erfolgt.) Zu ihrer Herstellung kann man in bekannter Wiese von Ammoniak, einem Monoalkylamin, einem Monoalkyl-monoalkanolamin oder einem Monoalkyl-dialkanolamin oder einem Mono-, Di- oder Trialkanolamin, beispielsweise Triethanolamin, Methyl-, Ethyl-, Propyl- und Isopropyl-diethanolamin, Methyl-, Ethyl-, Propyl- und Isopropyl-diisopropanolamin, Tripropanolamin, Triisopropanolamin, N,N-Di-(2-hydroxyethyl)cyclohexylamin, N,N-Di-(2-hydroxypropyl)cyclohexylamin, n-Butylamin, n-Hexylamin, n-Octylamin, Isopropylamin, sek-Butylamin, tert-Butylamin, Cyclohexylamin, 2-Ethylhexylamin, 2-Phenylethylamin und deren Mischungen, ausgehen, das mit einem Alkylenoxid, insbesondere ausgewählt aus der Gruppe bestehend aus Ethylenoxid, Propylenoxid, Butylenoxid und Mischungen daraus, umgesetzt wird, insbesondere mit einer Mischung enthaltend Propylenoxid und vorzugsweise Ethylenoxid, besonders bevorzugt mit Propylenoxid. Bei den so erhältlichen polyalkoxylierten Aminen kann es sich um Block- oder Random-Strukturen handeln. Besonders bevorzugt ist unter anderem ein polyalkoxyliertes Amin, erhältlich durch Propoxylierung von Triethanolamin, bevorzugt mit einer Länge der drei Seitenarme von jeweils 15 Propylenoxid-Einheiten. Ebenfalls bevorzugt ist auch ein polyalkoxyliertes Amin, erhältlich durch Propoxylierung von Triisopropanolamin, bevorzugt mit einer Länge der drei Seitenarme von jeweils 15 Propylenoxid-Einheiten. Ebenfalls geeignet sind polyalkoxylierte Monoalkylamine mit einer linearen, verzweigten oder cyclischen Alkylgruppe, wobei mit einem Alkylenoxid ausgewählt aus der Gruppe bestehend aus Ethylenoxid, Propylenoxid, Butylenoxid und Mischungen daraus alkoxyliert wird, bevorzugt mit einer Mischung enthaltend Propylenoxid, besonders bevorzugt mit Propylenoxid. Bevorzugt ist auch ein polyalkoxyliertes Amin, erhältlich durch Propoxylierung von tert-Butylamin, bevorzugt mit einer Länge der zwei Seitenarme von jeweils 12 Propylenoxid-Einheiten.

Bevorzugte polyalkoxylierte Amine genügen der allgemeinen Formel (I), 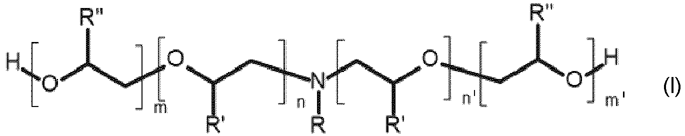
in der R für eine lineare, gegebenenfalls verzweigte oder gegebenenfalls cyclische Alkylgruppe mit 1 bis 12 C-Atomen oder einer Gruppe -(CH₂CHR'O)_{n"}-(CH₂CHR"O)_{m"}-H steht,
R` und R" unabhängig voneinander für H, CH₃ oder CH₂CH₃ stehen,
n, n' und n" unabhängig voneinander für Zahlen von 0 bis 30, vorzugsweise von 0 bis 10 und insbesondere 0 bis 5 stehen, und
m, m` und m" unabhängig voneinander für Zahlen von 0 bis 30, vorzugsweise von 5 bis 20 und insbesondere von 12 bis 16 stehen,
mit der Maßgabe, dass die Summe n + n` + n" + m + m' + m" mindestens 14 ist, vorzugsweise im Bereich von 18 bis 100 und insbesondere im Bereich von 20 bis 70 liegt. Bevorzugt ist in den Verbindungen der Formel I mindestens einer der Reste R` und R" eine CH₃-Gruppe.

Bevorzugte Waschmittelzubereitungen enthalten bezogen auf ihr Gesamtgewicht, 35 bis 60 Gew.-%, vorzugsweise 40 bis 55 Gew.-% Tensid.

Zur Gruppe der Tenside werden die nichtionischen, die anionischen, die kationischen und die amphoteren Tenside gezählt. Die erfindungsgemäßen Zusammensetzungen können eines oder mehrere der genannten Tenside umfassen. Besonders bevorzugte Zusammensetzungen enthalten Tensid aus der Gruppe der anionischen und nichtionischen Tenside.

Das anionische Tensid ist bevorzugt ausgewählt aus der Gruppe umfassend C₉-C₁₃-Alkylbenzolsulfonaten, Olefinsulfonaten, C₁₂-C₁₈-Alkansulfonaten, Estersulfonaten, Alk(en)ylsulfaten, Fettalkohohlethersulfaten und Mischungen daraus. Zusammensetzungen, die als anionisches Tensid C₉-C₁₃-Alkylbenzolsulfonate und Fettalkoholethersulfate umfassen, weisen besonders gute, dispergierende Eigenschaften auf. Als Tenside vom Sulfonat-Typ kommen dabei vorzugsweise C₉-C₁₃-Alkylbenzolsulfonate, Olefinsulfonate, das heißt Gemische aus Alken- und Hydroxyalkansulfonaten sowie Disulfonaten, wie man sie beispielsweise aus C₁₂-C₁₈-Monoolefinen mit end- oder innenständiger Doppelbindung durch Sulfonieren mit gasförmigem Schwefeltrioxid und anschließende alkalische oder saure Hydrolyse der Sulfonierungsprodukte erhält, in Betracht. Geeignet sind auch C₁₂-C₁₈-Alkansulfonate und die Ester von α-Sulfofettsäuren (Estersulfonate), zum Beispiel die α-sulfonierten Methylester der hydrierten Kokos-, Palmkern- oder Talgfettsäuren.

Bevorzugte Waschmittelzubereitungen enthalten, bezogen auf ihr Gesamtgewicht, 12 bis 30 Gew.-%, vorzugsweise 18 bis 26 Gew.-% anionisches Tensid.

Es ist ganz besonders bevorzugt, wenn in der Zusammensetzung mindestens ein anionisches Tensid der Formel (I) enthalten ist, 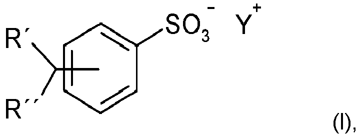 in der
R' und R" unabhängig H oder Alkyl sind und zusammen 8 bis 18, vorzugsweise 9 bis 15 und insbesondere 9 bis 13 C-Atome enthalten und Y⁺ ein einwertiges Kation oder den n-ten Teil eines n-wertigen Kations (insbesondere Monoethanolamin) bedeuten.

Zur Gruppe der Alkelyethersulfate zählen die Fettalkoholethersulfate, beispielsweise die Schwefelsäuremonoester der mit 1 bis 6 Mol Ethylenoxid ethoxylierten geradkettigen oder verzweigten C₇-C₂₁-Alkohole, wie 2-Methyl-verzweigte C9-11-Alkohole mit im Durchschnitt 3,5 Mol Ethylenoxid (EO) oder C12-18-Fettalkohole mit 1 bis 4 EO. Bevorzugt sind Alkylethersulfate mit der Formel (II)

R¹-O-(AO)ₙ-SO₃⁻X⁺ (II)

In dieser Formel (II) steht R¹ für einen linearen oder verzweigten, substituierten oder unsubstituierten Alkylrest, vorzugsweise für einen linearen, unsubstituierten Alkylrest, besonders bevorzugt für einen Fettalkoholrest. Bevorzugte Reste R¹ der Formel (II) sind ausgewählt aus Decyl-, Undecyl-, Dodecyl-, Tridecyl-, Tetradecyl, Pentadecyl-, Hexadecyl-, Heptadecyl-, Octadecyl-, Nonadecyl-, Eicosylresten und deren Mischungen, wobei die Vertreter mit gerader Anzahl an C-Atomen bevorzugt sind. Besonders bevorzugte Reste R¹ der Formel (II) sind abgeleitet von Fettalkoholen mit 12 bis 18 C-Atomen, beispielsweise von Kokosfettalkohol, Talgfettalkohol, Lauryl-, Myristyl-, Cetyl- oder Stearylalkohol oder von Oxoalkoholen mit 10 bis 20 C-Atomen.

AO steht in Formel (II) für eine Ethylenoxid- (EO) oder Propylenoxid- (PO) Gruppierung, vorzugsweise für eine Ethylenoxidgruppierung. Der Index n der Formel (I) ist eine ganze Zahl von 1 bis 50, vorzugsweise von 1 bis 20 und insbesondere von 2 bis 10. Ganz besonders bevorzugt ist n 2, 3, 4, 5, 6, 7 oder 8. X ist ein einwertiges Kation oder den n-ten Teil eines n-wertigen Kations, bevorzugt sind dabei die Alkalimetallionen und darunter Na⁺ oder K⁺, wobei Na⁺ äußerst bevorzugt ist. Weitere Kationen X+ können ausgewählt sein aus NH₄⁺, ½ Zn²⁺,½ Mg²⁺,½ Ca²⁺,½ Mn²⁺, und deren Mischungen sowie primären, sekundäre Aminen, insbesondere Monoethanolamin.

Besonders bevorzugte Zusammensetzungen enthalten ein Alkylethersulfat ausgewählt aus Fettalkoholethersulfaten der Formel (III) 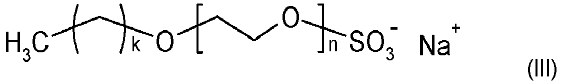 mit k = 11 bis 19, n = 2, 3, 4, 5, 6, 7 oder 8. Ganz besonders bevorzugte Vertreter sind Na Fettalkoholethersulfate mit 12 bis 18 C-Atomen und 2 EO (k = 11 bis 13, n = 2 in Formel III). Der angegebene Ethoxylierungsgrad stellt einen statistischen Mittelwert dar, der für ein spezielles Produkt eine ganze oder eine gebrochene Zahl sein kann. Die angegebenen Alkoxylierungsgrade stellen statistische Mittelwerte dar, die für ein spezielles Produkt eine ganze oder eine gebrochene Zahl sein können. Bevorzugte Alkoxylate/Ethoxylate weisen eine eingeengte Homologenverteilung auf (narrow range ethoxylates, NRE).

Zusammenfassend enthalten bevorzugte Waschmittelzubereitungen, bezogen auf ihr Gesamtgewicht, 12 bis 30 Gew.-%, vorzugsweise 15 bis 28 Gew.-% und insbesondere 18 bis 26 Gew.-% anionisches Tensid aus der Gruppe der C₈₋₁₈-Alkylbenzolsulfonate und Alkylethersulfate, vorzugsweise aus der Gruppe der C₈₋₁₈-Alkylbenzolsulfonate.

Als für die Stabilität und Reinigungsleistung vorteilhaft hat sich der Einsatz von Fettsäuren erwiesen. Bevorzugte Waschmittelzubereitungen enthalten daher, bezogen auf ihr Gesamtgewicht, 4 bis 12 Gew.-%, vorzugsweise 6 bis 10 Gew.-% Fettsäure. Besonders bevorzugte Fettsäuren sind ausgewählt aus der Gruppe Caprylsäure, Caprinsäure, Laurinsäure, Myristinsäure, Palmitinsäure, Stearinsäure, Ölsäure, Linolsäure und deren Mischungen. Die Fettsäuren werden im Rahmen der Anmeldung nicht der Gruppe der anionischen Tenside zugerechnet.

Die Waschmittelzubereitungen enthalten als einen weiteren bevorzugten optionalen Bestandteil nichtionisches Tensid. Dessen Gewichtsanteil am Gesamtgewicht der Waschmittelzubereitung beträgt bevorzugt 12 bis 30 Gew.-%, vorzugsweise 15 bis 28 Gew.-% und insbesondere 18 bis 26 Gew.-%.

Bevorzugt ist insbesondere der Einsatz nichtionischen Tensids aus der Gruppe der Alkylethoxylate, wobei bevorzugte Alkylethoxylate aus der Gruppe der ethoxylierten primären C₈₋₁₈-Alkohole, vorzugsweise der ethoxylierten primären C₈₋₁₈-Alkohole mit einem Alkoxylierungsgrad ≥ 4, besonders bevorzugt der C₁₂₋₁₄-Alkohole mit 4 EO oder 7 EO, der C₉₋₁₁-Alkohole mit 7 EO, der C₁₃₋₁₅-Alkohole mit 5 EO, 7 EO oder 8 EO, der C₁₃₋₁₅-Oxoalkohole mit 7 EO, der C₁₂₋₁₈-Alkohole mit 5 EO oder 7 EO, insbesondere der C₁₂₋₁₈-Fettalkohole mit 7 EO oder der C₁₃₋₁₅-Oxoalkohole mit 7 EO ausgewählt werden.

Zusammenfassend enthalten bevorzugte Waschmittelzubereitungen nichtionisches Tensid aus der Gruppe der ethoxylierten primären C₈₋₁₈-Alkohole, vorzugsweise der ethoxylierten primären C₈₋₁₈-Alkohole mit einem Alkoxylierungsgrad ≥ 4, besonders bevorzugt der C₁₂₋₁₄-Alkohole mit 4 EO oder 7 EO, der C₉₋₁₁-Alkohole mit 7 EO, der C₁₃₋₁₅-Alkohole mit 5 EO, 7 EO oder 8 EO, der C₁₃₋₁₅-Oxoalkohole mit 7 EO, der C₁₂₋₁₈-Alkohole mit 5 EO oder 7 EO, insbesondere der C₁₂₋₁₈-Fettalkohole mit 7 EO oder der C₁₃₋₁₅-Oxoalkohole mit 7 EO.

In Bezug auf die rheologischen Eigenschaften der Waschmittelzubereitung, deren Verarbeitbarkeit und Reinigungswirkung hat es sich als vorteilhaft erwiesen, nichtionisches Tensid und anionisches Tensid in einem Gewichtsverhältnis von 2:1 bis 1:2, vorzugsweise von 3:2 bis 2:3 einzusetzen.

Als weiteren optionalen Bestandteil enthält die Waschmittelzubereitung ein polyalkoxyliertes Polyalkylenimin, das erhältlich ist durch Umsetzung von Polyalkyleniminen mit Alkylenoxiden. Aufgrund ihrer Reinigungsleistung besonders bevorzugte Waschmittelzubereitungen enthalten, bezogen auf ihr Gesamtgewicht, polyalkoxyliertes Polyalkylenimin, das erhältlich ist durch Umsetzung von Polyalkyleniminen mit Alkylenoxiden in Mengen von 0,5 bis 7 Gew.-%, vorzugsweise von 1,0 bis 6 Gew.-% und insbesondere von 2,5 bis 5 Gew.-%.

Bei dem polyalkoxylierten Polyalkylenimin handelt es sich um ein Polymer mit einem Polyalkylenimin-Rückgrat, das an den N-Atomen Polyalkoxygruppen trägt. Es weist vorzugsweise ein gewichtsmittleres Molekulargewicht Mw im Bereich von 5000 g/mol bis 60000 g/mol, insbesondere von 10000 g/mol bis 22500 g/mol auf. Das Polyalkylenimin weist an den Enden primäre Aminofunktionen und im Inneren vorzugsweise sowohl sekundäre als auch tertiäre Aminofunktionen auf; gegebenenfalls kann es im Inneren auch lediglich sekundäre Aminofunktionen aufweisen, so dass sich nicht ein verzweigtkettiges, sondern ein lineares Polyalkylenimin ergibt. Das Verhältnis von primären zu sekundären Aminogruppen im Polyalkylenimin liegt vorzugsweise im Bereich von 1:0,5 bis 1:1,5, insbesondere im Bereich von 1:0,7 bis 1:1. Das Verhältnis von primären zu tertiären Aminogruppen im Polyalkylenimin liegt vorzugsweise im Bereich von 1:0,2 bis 1:1, insbesondere im Bereich von 1:0,5 bis 1:0,8. Vorzugsweise weist das Polyalkylenimin ein gewichtsmittleres Molekulargewicht im Bereich von 500 g/mol bis 50000 g/mol, insbesondere von 550 g/mol bis 2000 g/mol auf. Die N-Atome im Polyalkylenimin sind vorzugsweise durch Alkylengruppen mit 2 bis 12 C-Atomen, insbesondere 2 bis 6 C-Atomen, voneinander getrennt, wobei nicht sämtliche Alkylengruppen die gleiche C-Atomanzahl aufweisen müssen. Besonders bevorzugt sind Ethylengruppen, 1,2-Propylengruppen, 1,3-Propylengruppen, und deren Mischungen. Die primären Aminofunktionen im Polyalkylenimin können 1 oder 2 Polyalkoxygruppen und die sekundären Aminofunktionen 1 Polyalkoxygruppe tragen, wobei nicht jede Aminofunktion alkoxygruppensubstituiert sein muss. Die durchschnittliche Anzahl von Alkoxygruppen pro primärer und sekundärer Aminofunktion im polyalkoxylierten Polyalkyenimin beträgt vorzugsweise 5 bis 100, insbesondere 10 bis 50. Bei den Alkoxygruppen im polyalkoxylierten Polyalkylenimin handelt es sich vorzugsweise um Ethoxy-, Propoxy- oder Butoxygruppen oder Mischungen aus diesen. Besonders bevorzugt sind polyethoxylierte Polyethylenimine. Die polyalkoxylierten Polyalkylenimine sind durch Umsetzung der Polyalkylenimine mit den Alkoxygruppen entsprechender Epoxide zugänglich. Gewünschtenfalls kann die endständige OH-Funktion zumindest einiger der Polyalkoxysubstituenten durch eine Alkylether-Funktion mit 1 bis 10, insbesondere 1 bis 3 C-Atomen, ersetzt sein.

Bevorzugte Waschmittelzubereitungen enthalten, bezogen auf ihr Gesamtgewicht, 5 bis 18 Gew.-%, vorzugsweise 7 bis 15 Gew.-% Wasser.

Neben Wasser wird als weiteres Lösungsmittel vorzugsweise mindestens ein organisches Lösungsmittel eingesetzt. Der Einsatz wässrig-organischer Lösungsmittelsysteme hat sich für die Herstellbarkeit und Lagerfähigkeit als besonders vorteilhaft erwiesen und ist daher bevorzugt.

In einer bevorzugten Ausführungsform enthält die Waschmittelzubereitung, bezogen auf ihr Gesamtgewicht, 5 bis 30 Gew.-%, vorzugsweise 10 bis 20 Gew.-% organisches Lösungsmittel.

Bevorzugte organische Lösungsmittel sind ausgewählt aus der Gruppe Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropy-lenglykolmonoethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether sowie deren Mischungen, vorzugsweise aus der Gruppe Propandiol, Glycerin, Monoethanolamin und deren Mischungen.

Als bevorzugten optionalen Bestandteil enthält die Waschmittelzubereitung ein Phosphonat.

Der Gewichtsanteil des Phosphonats am Gesamtgewicht der Waschmittelzubereitung beträgt vorzugsweise 0,1 bis 3 Gew.-% und insbesondere 0,2 bis 1 Gew.-%.

Als Phosphonat-Verbindung wird vorzugsweise ein Phosphonat aus der Gruppe der Hydroxyalkan-und/oder Aminoalkanphosphonate, bevorzugt aus der Gruppe der Aminoalkanphosphonate und insbesondere aus der Gruppe Ethylendiamintetramethylenphosphonat (EDTMP) und Diethylentriaminpentamethylenphosphonat (DTPMP), insbesondere aus der Gruppe Diethylentriaminpentamethylenphosphonat (DTPMP) ausgewählt.

Die erfindungsgemäße Kombination aus Hexosaminidase Zubereitung und polyalkoxyliertem Amin zeichnet sich durch eine unerwartete Waschwirkung an bleichbaren Anschmutzungen aus. Vor diesem Hintergrund kann in den Waschmittelzubereitungen auf den Zusatz von Bleichmitteln, insbesondere Sauerstoffbleichmitteln verzichtet werden. Bevorzugte Waschmittelzubereitungen enthalten daher weniger als 5 Gew.-%, vorzugsweise weniger als 1 Gew.-% und insbesondere keine Bleichmittel, insbesondere Sauerstoffbleichmittel.

Unter einem Bleichmittel sind insbesondere solche Verbindungen zu verstehen, die in wässrigem Medium Wasserstoffperoxid liefern. Unter den als Bleichmittel dienenden, in Wasser HzOz liefernden Verbindungen haben das Natriumpercarbonat, das Natriumperborattetrahydrat und das Natriumperboratmonohydrat besondere Bedeutung. Weitere brauchbare Bleichmittel sind beispielsweise Peroxopyrophosphate, Citratperhydrate sowie HzOz liefernde persaure Salze oder Persäuren, wie Persulfate beziehungsweise Perschwefelsäure. Brauchbar ist auch das Harnstoffperoxohydrat Percarbamid, das durch die Formel H₂N-CO-NH₂ HzOz beschrieben werden kann. Insbesondere beim Einsatz der Mittel für das Reinigen harter Oberflächen, zum Beispiel beim maschinellen Geschirrspülen, können die Waschmittelportionseinheiten gewünschtenfalls auch Bleichmittel aus der Gruppe der organischen Bleichmittel enthalten, obwohl deren Einsatz prinzipiell auch bei Mitteln für die Textilwäsche möglich ist. Typische organische Bleichmittel sind die Diacylperoxide, wie zum Beispiel Dibenzoylperoxid. Weitere typische organische Bleichmittel sind die Peroxysäuren, wobei als Beispiele besonders die Alkylperoxysäuren und die Arylperoxysäuren genannt werden. Bevorzugte Vertreter sind (a) die Peroxybenzoesäure und ihre ringsubstituierten Derivate, wie Alkylperoxybenzoesäuren, aber auch Peroxy-α-Naphthoesäure und Magnesium-monoperphthalat, (b) die aliphatischen oder substituiert aliphatischen Peroxysäuren, wie Peroxylaurinsäure, Peroxystearinsäure, ε-Phthalimidoperoxycapronsäure (Phthalimidoperoxyhexansäure, PAP), o-Carboxybenzamidoperoxycapronsäure, N-Nonenylamidoperadipinsäure und N-Nonenylamidopersuccinate, und (c) aliphatische und araliphatische Peroxydicarbonsäuren, wie 1,12-Diperoxycarbonsäure, 1,9-Diperoxyazelainsäure, Diperoxysebacinsäure, Diperoxybrassylsäure, die Diperoxyphthalsäuren, 2-Decyldiperoxybutan-1,4-disäure, N,N-Terephthaloyl-di(6-aminopercapronsäure). Bevorzugte Sauerstoffbleichmittel sind in partikulärer Form konfektioniert, wobei die Partikel eine Beschichtung aufweisen.

Als weiteren fakultativen Bestandteil umfasst eine bevorzugte Waschmittelzubereitung 0,2 bis 4 Gew.-%, vorzugsweise 0,5 bis 3 Gew.-% Duftstoffzubereitung.

Neben den eigentlichen Duftstoffen umfasst die Duftstoffzubereitung beispielsweise Lösungsmittel, feste Trägermaterialien oder Stabilisatoren.

Bei einem Duftstoff handelt es sich um eine den Geruchsinn anregende, chemische Substanz. Um den Geruchssinn anregen zu können, sollte die chemische Substanz zumindest teilweise in der Luft verteilbar sein, d.h. der Duftstoff sollte bei 25°C zumindest in geringem Maße flüchtig sein. Ist der Duftstoff nun sehr flüchtig, klingt die Geruchsintensität dann schnell wieder ab. Bei einer geringeren Flüchtigkeit ist der Gerucheindruck jedoch nachhaltiger, d.h. er verschwindet nicht so schnell. In einer Ausführungsform weist der Duftstoff daher einen Schmelzpunkt auf, der im Bereich von -100°C bis 100°C, bevorzugt von -80°C bis 80°C, noch bevorzugter von -20°C bis 50°C, insbesondere von -30°C bis 20°C liegt. In einer weiteren Ausführungsform weist der Duftstoff einen Siedepunkt auf, der im Bereich von 25°C bis 400°C, bevorzugt von 50°C bis 380°C, mehr bevorzugt von 75°C bis 350°C, insbesondere von 100°C bis 330°C liegt.

Insgesamt sollte eine chemische Substanz eine bestimmte Molekülmasse nicht überschreiten, um als Duftstoff zu fungieren, da bei zu hoher Molekülmasse die erforderliche Flüchtigkeit nicht mehr gewährleitstet werden kann. In einer Ausführungsform weist der Duftstoff eine Molekülmasse von 40 bis 700 g/mol, noch bevorzugter von 60 bis 400 g/mol auf.

Der Geruch eines Duftstoffes wird von den meisten Menschen als angenehm empfunden und entspricht häufig dem Geruch nach beispielsweise Blüten, Früchten, Gewürzen, Rinde, Harz, Blättern, Gräsern, Moosen und Wurzeln. So können Duftstoffe auch dazu verwendet werden, um unangenehme Gerüche zu überlagern oder aber auch um einen nicht riechenden Stoff mit einem gewünschten Geruch zu versehen. Als Duftstoffe können einzelne Riechstoffverbindungen, z.B. die synthetischen Produkte vom Typ der Ester, Ether, Aldehyde, Ketone, Alkohole und Kohlenwasserstoffe verwendet werden.

Bevorzugt werden Mischungen verschiedener Duftstoffe verwendet, die gemeinsam eine ansprechende Duftnote erzeugen. Ein derartiges Gemisch an Duftstoffen kann auch als Parfüm oder Parfümöl bezeichnet werden. Solche Parfümöle können auch natürliche Duftstoffgemische enthalten, wie sie aus pflanzlichen Quellen zugänglich sind.

Für die Verlängerung der Duftwirkung hat es sich als vorteilhaft erwiesen, den Duftstoff zu verkapseln. In einer entsprechenden Ausführungsform wird zumindest ein Teil des Duftstoffs in verkapselter Form (Duftstoffkapseln), insbesondere in Mikrokapseln, eingesetzt. Es kann aber auch der gesamte Duftstoff in verkapselter Form eingesetzt werden. Bei den Mikrokapseln kann es sich um wasserlösliche und/oder wasserunlösliche Mikrokapseln handeln. Es können beispielsweise Melamin-Harnstoff-Formaldehyd-Mikrokapseln, Melamin-Formaldehyd-Mikrokapseln, Harnstoff-Formaldehyd-Mikrokapseln oder Stärke-Mikrokapseln eingesetzt werden. "Duftstoffvorläufer" bezieht sich auf Verbindungen, die erst nach chemischer Umwandlung/Spaltung, typischerweise durch Einwirkung von Licht oder anderen Umgebungsbedingungen, wie pH-Wert, Temperatur, etc., den eigentlichen Duftstoff freisetzen. Derartige Verbindungen werden häufig auch als Duftspeicherstoffe oder "Pro-Fragrance" bezeichnet.

Die Zusammensetzung einiger bevorzugter Waschmittelzubereitungen kann den folgenden Tabellen entnommen werden (Angaben in Gew.-% bezogen auf das Gesamtgewicht der Zubereitung sofern nicht anders angegeben). Die Waschmittelzubereitungen sind vorzugsweise unter Standardbedingungen (20°C, 1013 mbar) fließfähig und werden mit besonderem Vorzug als Waschmittelportionseinheiten konfektioniert, bei denen die Waschmittelzubereitung vollständig von einem wasserlöslichen Film umschlossen wird.

| | Formel 1 | Formel 2 | Formel 3 | Formel 4 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Misc | ad 100 | ad 100 | ad 100 | ad 100 |

| | Formel 6 | Formel 7 | Formel 8 | Formel 9 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Wasser | 5 bis 18 | 5 bis 18 | 7 bis 15 | 7 bis 15 |
| Misc | ad 100 | ad 100 | ad 100 | ad 100 |

| | Formel 11 | Formel 12 | Formel 13 | Formel 14 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 16 | Formel 17 | Formel 18 | Formel 19 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 21 | Formel 22 | Formel 23 | Formel 24 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | Formel 26 | Formel 27 | Formel 28 | Formel 29 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Misc | ad 100 | ad 100 | ad 100 | ad 100 |

| | Formel 31 | Formel 32 | Formel 33 | Formel 34 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Wasser | 5 bis 18 | 5 bis 18 | 7 bis 15 | 7 bis 15 |
| Misc | ad 100 | ad 100 | ad 100 | ad 100 |

| | Formel 36 | Formel 37 | Formel 38 | Formel 39 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 41 | Formel 42 | Formel 43 | Formel 44 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 46 | Formel 47 | Formel 48 | Formel 49 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | Formel 51 | Formel 52 | Formel 53 | Formel 54 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ¹⁾ | 0,5 bis 10 | 1 bis 9 | 1 bis 9 | 1,5 bis 7,5 |
| Alkylbenzolsulfonsäure | 12 bis 40 | 15 bis 30 | 15 bis 30 | 18 bis 25 |
| ethoxylierter primärer C₈₋₁₈-Alkohole mit einem Alkoxylierungsgrad ≥ 4 | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | Formel 56 | Formel 56 | Formel 57 | Formel 58 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Misc | ad 100 | ad 100 | ad 100 | ad 100 |

| | Formel 61 | Formel 63 | Formel 64 | Formel 65 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxylierten Amin ³⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Wasser | 5 bis 18 | 5 bis 18 | 7 bis 15 | 7 bis 15 |
| Misc | ad 100 | ad 100 | ad 100 | ad 100 |

| | Formel 66 | Formel 67 | Formel 68 | Formel 69 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 71 | Formel 72 | Formel 73 | Formel 74 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 76 | Formel 77 | Formel 78 | Formel 79 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Tensid | 35 bis 55 | 35 bis 55 | 40 bis 50 | 40 bis 50 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | Formel 81 | Formel 82 | Formel 83 | Formel 84 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Misc | ad 100 | ad 100 | ad 100 | ad 100 |

| | Formel 86 | Formel 87 | Formel 88 | Formel 89 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Wasser | 5 bis 18 | 5 bis 18 | 7 bis 15 | 7 bis 15 |
| Misc | ad 100 | ad 100 | ad 100 | ad 100 |

| | Formel 91 | Formel 92 | Formel 93 | Formel 94 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 96 | Formel 97 | Formel 98 | Formel 99 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Wasser | 5 bis 18 | 5 bis 18 | 7 bis 15 | 7 bis 15 |
| Misc | ad 100 | ad 100 | ad 100 | ad 100 |

| | Formel 101 | Formel 102 | Formel 103 | Formel 104 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Anionisches Tensid | 12 bis 40 | 15 bis 30 | 15 bis 30 | 18 bis 25 |
| Nichtionisches Tensid | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | Formel 106 | Formel 107 | Formel 108 | Formel 109 |
|---|---|---|---|---|
| Hexosaminidase Zubereitung | 0,1 bis 0,8 | 0,1 bis 0,4 | 0,1 bis 0,4 | 0,2 bis 0,3 |
| polyalkoxyliertes Amin ³⁾ | 0,5 bis 10 | 1 bis 9 | 1 bis 9 | 1,5 bis 7,5 |
| Alkylbenzolsulfonsäure | 12 bis 40 | 15 bis 30 | 15 bis 30 | 18 bis 25 |
| ethoxylierter primärer C₈₋₁₈-Alkohole mit einem Alkoxylierungsgrad ≥ 4 | 12 bis 40 | 15 bis 30 | 15 bis 30 | 18 bis 25 |
| Fettsäure | 4 bis 12 | 4 bis 12 | 4 bis 12 | 6 bis 10 |
| Enzym-Zubereitung ²⁾ | 0,2 bis 5 | 0,2 bis 5 | 0,2 bis 5 | 0,5 bis 4 |
| Phosphonat | 0,1 bis 3 | 0,1 bis 3 | 0,1 bis 3 | 0,2 bis 1 |
| Wasser | 5 bis 18 | 5 bis 18 | 7 bis 15 | 7 bis 15 |
| Misc | ad 100 | ad 100 | ad 100 | ad 100 |

| | | | | |
|---|---|---|---|---|
| ¹⁾ polyalkoxyliertes Amin mit einem gewichtsmittleren Molekulargewicht M_{w} im Bereich von 600 g/mol bis 10000 g/mol, das erhältlich ist durch Umsetzung von Ammoniak oder primären Alkyl-oder Hydroxyalkylaminen, die ein Molekulargewicht unter 200 g/mol aufweisen, vorzugsweise erhältlich ist durch Umsetzung von Triethanolamin mit Alkylenoxiden ²⁾ mindestens eine Enzym-Zubereitung, vorzugweise mindestens 3 Enzymzubereitungen von Enzymen aus der Gruppe Lipase, Amylase, Protease, Cellulase, Zubereitungen eines pektinolytischen Enzyms und Endoglucanase ³⁾ polyalkoxyliertes Amin mit einem gewichtsmittleren Molekulargewicht M_{w} im Bereich von 1400 g/mol bis 4500 g/mol, das erhältlich ist durch Umsetzung von Ammoniak oder primären Alkyl-oder Hydroxyalkylaminen, die ein Molekulargewicht unter 200 g/mol aufweisen, mit Alkylenoxiden, wobei die polyalkoxylierten Amine der allgemeinen Formel (I) genügen, | | | | |

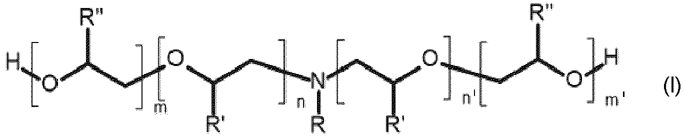

in der R für eine lineare, gegebenenfalls verzweigte oder gegebenenfalls cyclische Alkylgruppe mit 1 bis 12 C-Atomen oder einer Gruppe -(CH₂CHR'O)_{n"}-(CH₂CHR"O)_{m"}-H steht, R` und R" unabhängig voneinander für H, CH₃ oder CH₂CH₃ stehen,
n, n' und n" unabhängig voneinander für Zahlen von 0 bis 30, vorzugsweise von 0 bis 10 und insbesondere 0 bis 5 stehen, und
m, m` und m" unabhängig voneinander für Zahlen von 0 bis 30, vorzugsweise von 5 bis 20 und insbesondere von 12 bis 16 stehen,
mit der Maßgabe, dass die Summe n + n` + n" + m + m' + m" mindestens 14 ist, vorzugsweise im Bereich von 18 bis 100 und insbesondere im Bereich von 20 bis 70 liegt. Bevorzugt ist in den Verbindungen der Formel I mindestens einer der Reste R` und R" eine CH₃-Gruppe.

Die zuvor beschriebenen Stoffsysteme eignen sich nicht allein zur Sicherstellung einer einfachen Herstellbarkeit, guten Lagerfähigkeit und Reinigungsleistung, sondern ermöglichen zudem die Verwirklichung einer für den Verbraucher attraktiven Produktoptik. Als optisch attraktiv werden dabei beispielsweise solche Waschmittelzubereitungen wahrgenommen, die transparent sind und folglich eine geringe Trübung aufweisen. Bevorzugte Waschmittelzubereitungen weisen daher eine Trübung (HACH Turbidimeter 2100Q, 20°C, 10 ml Küvette) unterhalb 100 NTU, vorzugsweise unterhalb 50 NTU und insbesondere unterhalb 20 NTU auf. Bei einem NTU-Wert (bei 20°C) von 60 oder mehr weisen Formkörper mit dem bloßen Auge erkennbar im Sinne der Erfindung eine wahrnehmbare Trübung auf.

Die optischen Vorteile der konzentrierten Waschmittelzubereitungen kommen insbesondere in Verpackungsmitteln zur Geltung, die ihrerseits transparent sind und einen direkten Blick auf die Waschmittelzusammensetzung ermöglichen. Neben transparenten Kunststoffflaschen werden zur Konfektionierung und Verpackung daher insbesondere transparente Beutel, insbesondere wasserlösliche transparente Beutel bevorzugt.

Ein weiterer bevorzugter Gegenstand dieser Anmeldung ist daher eine Waschmittelportionseinheit umfassend
i) eine erfindungsgemäße Waschmittelzubereitung
ii) einen wasserlöslichen Film, welcher die Waschmittelzubereitung vollständig umschließt.

Der wasserlösliche Film, in welche die Waschmittelzubereitung verpackt ist, kann ein oder mehrere strukturell verschiedene wasserlösliche(s) Polymer(e) umfassen. Als wasserlösliche(s) Polymer(e) eignen sich insbesondere Polymere aus der Gruppe (gegebenenfalls acetalisierter) Polyvinylalkohole (PVAL) sowie deren Copolymere.

Wasserlösliche Filme basieren bevorzugt auf einem Polyvinylalkohol oder einem Polyvinylalkoholcopolymer, dessen Molekulargewicht im Bereich von 10.000 bis 1.000.000 gmol⁻¹, vorzugsweise von 20.000 bis 500.000 gmol⁻¹, besonders bevorzugt von 30.000 bis 100.000 gmol⁻¹ und insbesondere von 40.000 bis 80.000 gmol⁻¹ liegt.

Die Herstellung der Polyvinylalkohol und Polyvinylalkoholcopolymere schließt in der Regel die Hydrolyse intermediären Polyvinylacetats ein. Bevorzugte Polyvinylalkohole und Polyvinylalkoholcopolymere weisen einen Hydrolysegrad 70 bis 100 Mol-%, vorzugsweise 80 bis 90 Mol-%, besonders bevorzugt 81 bis 89 Mol-% und insbesondere 82 bis 88 Mol-% auf.

Bevorzugte Polyvinylalkoholcopolymere umfassen neben Vinylalkohol eine ethylenisch ungesättigte Carbonsäure, deren Salz oder deren Ester. Besonders bevorzugt enthalten solche Polyvinylalkoholcopolymere neben Vinylalkohol Sulfonsäuren wie die 2-Acrylamido-2-methyl-1-propansulfonsäure (AMPS), Acrylsäure, Methacrylsäure, Acrylsäureester, Methacrylsäureester oder Mischungen daraus; unter den Estern sind C₁₋₄-Alkylester oder - Hydroxyalkylester bevorzugt. Als weitere Monomere kommen ethylenisch ungesättigte Dicarbonsäuren, beispielsweise Itaconsäure, Maleinsäure, Fumarsäure und Mischungen daraus in Betracht.

Geeignete wasserlösliche Filme zum Einsatz werden u.a. von der Firma MonoSol LLC beispielsweise unter der Bezeichnung M8630, M8720, M8310, C8400 oder M8900 vertrieben. Geeignet sind beispielsweise auch Filme mit der Bezeichnung Solublon^{®} PT, Solublon^{®} GA, Solublon^{®} KC oder Solublon^{®} KL von der Aicello Chemical Europe GmbH oder die Folien VF-HP von Kuraray.

Die wasserlöslichen Filme können als weitere Inhaltsstoffe zusätzliche Wirk- oder Füllstoffe aber auch Weichmacher und/oder Lösungsmittel, insbesondere Wasser, enthalten.

Zur Gruppe der weiteren Wirkstoffe zählen dabei beispielsweise Materialien, welche die von dem Folienmaterial umschlossenen Inhaltsstoffe der Zubereitung vor Zersetzung oder Desaktivierung durch Lichteinstrahlung schützen. Als besonders geeignet haben sich hier Antioxidantien, UV-Absorber und Fluoreszensfarbstoffe erwiesen.

Als Weichmacher können beispielsweise Glycerin, Ethylenglycol, Diethylenglycol, Propandiol, 2-Methyl-1,3-propandiol, Sorbit oder deren Gemische eingesetzt werden.

Zur Verminderung ihrer Reibungskoeffizienten kann die Oberfläche des wasserlöslichen Films der Waschmittelportionseinheit optional mit feinem Pulver abgepudert werden. Natriumaluminosilicat, Siliciumdioxid, Talk und Amylose sind Beispiele für geeignete Pudermittel.

Bevorzugte wasserlösliche Filme eignen sich zur Verarbeitung in einer Tiefziehapparatur.

Das Volumen der Waschmittelportionseinheit beträgt vorzugsweise von 12 bis 22 ml, insbesondere von 12 bis 20 ml.

Bevorzugte Waschmittelportionseinheit weisen eine bis vier Aufnahmekammern, vorzugsweise drei oder vier Aufnahmekammern auf. Bei Waschmittelportionseinheiten mit zwei oder mehr Aufnahmekammern ist vorzugsweise mindestens eine der Aufnahmekammern, vorzugsweise die Mehrzahl der Aufnahmekammern transparent.

Ein weiterer Anmeldungsgegenstand ist ein Verfahren zur Textilreinigung, bei welchem eine zuvor beschriebenen Waschmittelzubereitung oder Waschmittelportionseinheit in die Waschflotte einer Textilwaschmaschine eingebracht wird.

In bevorzugten Verfahrensvarianten wird die Waschmittelzubereitung oder die Waschmittelportionseinheit direkt in die Trommel oder in die Einspülschublade der Textilwaschmaschine dosiert.

Das maschinelle Textilwaschverfahren erfolgt vorzugsweise bei Temperaturen von 20°C bis 60°C, bevorzugt von 30°C bis 45°C. Bevorzugte Textilwaschverfahren dienen der Reinigung von Baumwollgewebe.

Wie eingangs ausgeführt, eignen sich die beschriebenen Waschmittelzubereitungen insbesondere zur Beseitigung bleichbarer Anschmutzungen. Die Verwendung der zuvor beschriebenen Waschmittelzubereitungen oder Waschmittelportionseinheit zur Reinigung von bleichbaren Anschmutzungen ist daher ein weiterer Gegenstand der vorliegenden Anmeldung.

Durch diese Anmeldung werden u.a. die folgenden Gegenstände bereitgestellt:
1. Waschmittelzubereitung, enthaltend, bezogen auf ihr Gesamtgewicht,
   a) Hexosaminidase Zubereitung;
   b) 0,5 bis 10 Gew.-% eines polyalkoxylierten Amins mit einem gewichtsmittleren Molekulargewicht M_{w} im Bereich von 600 g/mol bis 10000 g/mol, das erhältlich ist durch Umsetzung von Ammoniak oder primären Alkyl- oder Hydroxyalkylaminen, die ein Molekulargewicht unter 200 g/mol aufweisen, mit Alkylenoxiden.
2. Waschmittelzubereitung nach Punkt 1, wobei die Waschmittelzubereitung unter Standardbedingungen (20°C, 1013 mbar) flüssig ist.
3. Waschmittelzubereitung nach einem der vorherigen Punkte, wobei die Waschmittelzubereitung bezogen auf ihr Gesamtgewicht, 0,01 bis 5 Gew.-%, vorzugsweise 0,1 bis 4 Gew.-% und insbesondere 0,15 bis 2,5 Gew.-% Hexosaminidase Zubereitung enthält.
4. Waschmittelzubereitung nach einem der vorherigen Punkte, wobei die Hexosaminidase ausgewählt ist aus der Gruppe der β-Hexosaminidasen.
5. Waschmittelzubereitung nach einem der vorherigen Punkte, wobei die Waschmittelzubereitung, bezogen auf ihr Gesamtgewicht, 0,2 bis 8 Gew.-%, vorzugsweise 0,5 bis 6 Gew.-% Enzymzubereitung enthält.
6. Waschmittelzubereitung nach einem der vorherigen Punkte, wobei die Waschmittelzubereitung weiterhin mindestens eine Enzym-Zubereitung, vorzugweise mindestens 3 Enzymzubereitungen von Enzymen aus der Gruppe Lipase, Amylase, Protease, Cellulase, Zubereitungen eines pektinolytischen Enzyms und Endoglucanase enthält.
7. Waschmittelzubereitung nach einem der vorherigen Punkte, wobei die Waschmittelzubereitung, bezogen auf ihr Gesamtgewicht, 0,1 bis 2 Gew.-%, vorzugsweise 0,2 bis 1 Gew.-% einer Amylase Zubereitung enthält.
8. Waschmittelzubereitung nach einem der vorherigen Punkte, wobei die Waschmittelzubereitung, bezogen auf ihr Gesamtgewicht, 0,2 bis 3 Gew.-%, vorzugsweise 0,4 bis 2 Gew.-% einer Protease Zubereitung enthält.
9. Waschmittelzubereitung nach einem der vorherigen Punkte, wobei die Waschmittelzubereitung, bezogen auf ihr Gesamtgewicht, 0,01 bis 1 Gew.-%, vorzugsweise 0,02 bis 0,3 Gew.-% einer Mannanase Zubereitung enthält.
10. Waschmittelzubereitung nach einem der vorherigen Punkte, wobei die Waschmittelzubereitung, bezogen auf ihr Gesamtgewicht, 0,01 bis 1 Gew.-%, vorzugsweise 0,05 bis 0,3 Gew.-% einer Cellulase Zubereitung enthält.
11. Waschmittelzubereitung nach einem der vorherigen Punkte, wobei die Enzym-Zubereitungen, bezogen auf ihr Gesamtgewicht, einen Gewichtsanteil an aktivem Protein von 0,1 und 40 Gew.-%, bevorzugt von 0,2 und 30 Gew.-% aufweisen.
12. Waschmittelzubereitung nach einem der vorherigen Punkte, wobei die Waschmittelzubereitung, bezogen auf ihr Gesamtgewicht, 1 bis 8 Gew.-%, vorzugsweise 3 bis 6 Gew.-% polyalkoxyliertes Amin enthält.
13. Waschmittelzubereitung nach einem der vorherigen Punkte, wobei das polyalkoxylierte Amin ein gewichtsmittleres Molekulargewicht M_{w} im Bereich von 1300 g/mol bis 6000 g/mol, insbesondere von 1400 g/mol bis 4500 g/mol aufweist.
14. Waschmittelzubereitung nach einem der vorherigen Punkte, wobei das polyalkoxylierte Amin erhältlich ist durch Umsetzung von Triethanolamin mit Alkenoxiden.
15. Waschmittelzubereitung nach einem der vorherigen Punkte, wobei das polyalkoxylierte Amin erhältlich ist durch Umsetzung von Ammoniak oder primären Alkyl- oder Hydroxyalkylaminen mit einem Alkenoxid aus der Gruppe Ethylenoxid, Propylenoxid und deren Mischungen.
16. Waschmittelzubereitung nach einem der vorherigen Punkte, wobei die Waschmittelzubereitung, bezogen auf ihr Gesamtgewicht 35 bis 60 Gew.-%, vorzugsweise 40 bis 55 Gew.-% Tensid.
17. Waschmittelzubereitung nach einem der vorherigen Punkte, wobei die Waschmittelzubereitung, bezogen auf ihr Gesamtgewicht, 12 bis 30 Gew.-%, vorzugsweise 18 bis 26 Gew.-% anionisches Tensid enthält.
18. Waschmittelzubereitung nach einem der vorherigen Punkte, wobei die Waschmittelzubereitung, bezogen auf ihr Gesamtgewicht, 12 bis 30 Gew.-%, vorzugsweise 15 bis 28 Gew.-% und insbesondere 18 bis 26 Gew.-% anionisches Tensid aus der Gruppe der C₈₋₁₈-Alkylbenzolsulfonate und Alkylethersulfate, vorzugsweise aus der Gruppe der C₈₋₁₈-Alkylbenzolsulfonate enthält.
19. Waschmittelzubereitung nach einem der vorherigen Punkte, wobei die Waschmittelzubereitung, bezogen auf ihr Gesamtgewicht, 12 bis 30 Gew.-%, vorzugsweise 18 bis 26 Gew.-% nichtionisches Tensid enthält.
20. Waschmittelzubereitung nach einem der vorherigen Punkte, wobei die Waschmittelzubereitung, bezogen auf ihr Gesamtgewicht, 12 bis 30 Gew.-%, vorzugsweise 15 bis 28 Gew.-% und insbesondere 18 bis 26 nichtionisches Tensid aus der Gruppe der ethoxylierten primären C₈₋₁₈-Alkohole, vorzugsweise der ethoxylierten primären C₈₋₁₈-Alkohole mit einem Alkoxylierungsgrad ≥ 4, besonders bevorzugt der C₁₂₋₁₄-Alkohole mit 4 EO oder 7 EO, der C₉₋₁₁-Alkohole mit 7 EO, der C₁₃₋₁₅-Alkohole mit 5 EO, 7 EO oder 8 EO, der C₁₃₋₁₅-Oxoalkohole mit 7 EO, der C₁₂₋₁₈-Alkohole mit 5 EO oder 7 EO, insbesondere der C₁₂₋₁₈-Fettalkohole mit 7 EO oder der C₁₃₋₁₅-Oxoalkohole mit 7 EO enthält.
21. Waschmittelzubereitung nach einem der vorherigen Punkte, wobei die Waschmittelzubereitung nichtionisches Tensid und anionisches Tensid in einem Gewichtsverhältnis von 3:1 bis 1:3, vorzugsweise von 2:1 bis 1:2 und insbesondere von 3:2 bis 2:3 enthält.
22. Waschmittelzubereitung nach einem der vorherigen Punkte, wobei die Waschmittelzubereitung, bezogen auf ihr Gesamtgewicht, 4 bis 12 Gew.-%, vorzugsweise 6 bis 10 Gew.-% Fettsäure enthält.
23. Waschmittelzubereitung nach Punkt 22, wobei die Fettsäure aus der Gruppe Caprylsäure, Caprinsäure, Laurinsäure, Myristinsäure, Palmitinsäure, Stearinsäure, Ölsäure, Linolsäure und deren Mischungen ausgewählt ist.
24. Waschmittelzubereitung nach einem der vorherigen Punkte, wobei die Waschmittelzubereitung, bezogen auf ihr Gesamtgewicht, 5 bis 18 Gew.-%, vorzugsweise 7 bis 15 Gew.-% Wasser enthält.
25. Waschmittelzubereitung nach einem der vorherigen Punkte, wobei die Waschmittelzubereitung, bezogen auf ihr Gesamtgewicht, 5 bis 30 Gew.-%, vorzugsweise 10 bis 20 Gew.-% organisches Lösungsmittel enthält.
26. Waschmittelzubereitung nach Punkt 25, wobei das organisches Lösungsmittel ausgewählt ist aus der Gruppe Ethanol, n-Propanol, i-Propanol, Butanolen, Glykol, Propandiol, Butandiol, Methylpropandiol, Glycerin, Diglykol, Propyldiglycol, Butyldiglykol, Hexylenglycol, Ethylenglykolmethylether, Ethylenglykolethylether, Ethylenglykolpropylether, Ethylenglykolmono-n-butylether, Diethylenglykolmethylether, Diethylenglykolethylether, Propylenglykolmethylether, Propylenglykolethylether, Propylenglykolpropylether, Dipropylenglykolmonomethylether, Dipropy-lenglykolmonoethylether, Methoxytriglykol, Ethoxytriglykol, Butoxytriglykol, 1-Butoxyethoxy-2-propanol, 3-Methyl-3-methoxybutanol, Propylen-glykol-t-butylether, Di-n-octylether sowie deren Mischungen, vorzugsweise aus der Gruppe Propandiol, Glycerin, Monoethanolamin und deren Mischungen.
27. Waschmittelzubereitung nach einem der vorherigen Punkte, wobei die Waschmittelzubereitung, bezogen auf ihr Gesamtgewicht, 0,1 bis 3 Gew.-%, vorzugsweise 0,2 bis 1 Gew.-% Phosphonat enthält.
28. Waschmittelzubereitung nach einem der vorherigen Punkte, wobei die Waschmittelzubereitung Phosphonat enthält und das Phosphonat aus der Gruppe der Hydroxyalkan- und/oder Aminoalkanphosphonate, bevorzugt aus der Gruppe der Aminoalkanphosphonate und insbesondere aus der Gruppe Ethylendiamintetramethylenphosphonat (EDTMP) und Diethylentriaminpentamethylenphosphonat (DTPMP) ausgewählt ist.
29. Waschmittelzubereitung nach einem der vorherigen Punkte, wobei die Waschmittelzubereitung, bezogen auf ihr Gesamtgewicht, 0,2 bis 4 Gew.-%, vorzugsweise 0,5 bis 3 Gew.-% Duftstoffzubereitung enthält.
30. Waschmittelportionseinheit umfassend
   i) eine Waschmittelzubereitung nach einem der Punkte 1 bis 29
   ii) einen wasserlöslichen Film, welcher die Waschmittelzubereitung vollständig umschließt.
31. Waschmittelportionseinheit nach Punkt 30, wobei die Waschmittelportionseinheit ein Volumen von 12 bis 22 ml, vorzugsweise von 12 bis 20 ml aufweist.
32. Waschmittelportionseinheit nach einem der Punkte 30 oder 31, wobei die Waschmittelportionseinheit eine bis vier Aufnahmekammern, vorzugsweise drei oder vier Aufnahmekammern aufweist.
33. Verfahren zur Textilreinigung, bei welchem eine Waschmittelzubereitung nach einem der Punkte 1 bis 29 oder eine Waschmittelportionseinheit nach einem der Punkte 30 bis 32 in die Waschflotte einer Textilwaschmaschine eingebracht wird.
34. Verfahren nach Punkt 33 zur Reinigung von Baumwollgewebe.
35. Verwendung einer Waschmittelzubereitung nach einem der Punkte 1 bis 29 oder einer Waschmittelportionseinheit nach einem der Punkte 30 bis 32 zur Reinigung von bleichbaren Anschmutzungen.

### Beispiele

Textile Flächengebilde wurden mit standardisierten Verschmutzungen versehen und nachfolgend bei 40°C in Waschflotten gewaschen, welche 1g/l eines Waschmittels V1 bis V3 oder E1 enthielten. Nach der Wäsche wurden die Textilien getrocknet. Die Helligkeitswerte der gereinigten Textilien wurden bestimmt. Die angegebenen Werte ergaben sich als Mittelwerte aus fünf Waschversuchen.

**Tabelle 1: Waschmittelzusammensetzungen (Gew.-%)**

| | **V1** | **V2** | **V3** | **E1** |
|---|---|---|---|---|
| Propanediol-1,2 | 6,4 | 6,4 | 6,4 | 6,4 |
| Glycerin | 9,4 | 9,4 | 9,4 | 9,4 |
| Monoethanolamin | 6,0 | 6,0 | 6,0 | 6,0 |
| C12-18 Fettalkoholethoxylat, 7 EO | 20 | 20 | 24,5 | 20 |
| C10-13 Alkylbenzolsulfonsäure | 22 | 22 | 22 | 22 |
| C12-18 Fettsäure | 7,0 | 7,0 | 7,0 | 7,0 |
| Ethoxliertes Polyethylenimin | 4,5 | 4,5 | 4,5 | 4,5 |
| DTPMP (40% in Wasser) | 0,5 | 0,5 | 0,5 | 0,5 |
| Optischer Aufheller | 0,5 | 0,5 | 0,5 | 0,5 |
| Protease | 2,6 | 2,6 | 2,6 | 2,6 |
| Mannanase | 0,1 | 0,1 | 0,1 | 0,1 |
| Amylase | 0,4 | 0,4 | 0,4 | 0,4 |
| Cellulase | 0,1 | 0,1 | 0,1 | 0,1 |
| β-Hexosaminidase | - | 0,47 | 0,47 | 0,47 |
| polyalkoxyliertes Alkanolamin | 4,5 | - | - | 4,5 |
| Wasser, Misc | ad 100 | ad 100 | ad 100 | ad 100 |

Die Messergebnisse sind in der folgenden Tabelle dargestellt (höhere Zahlen zeigen einen höheren Weißgrad an):

**Tabelle 2: Testergebnisse**

| Fleck | Textil | V1 | V2 | V3 | E1 |
|---|---|---|---|---|---|
| Rotwein | Baumwolle | 80,3 | 80,4 | 79,6 | 80,8 |
| Gras | Baumwolle | 57,0 | 56,8 | 56,6 | 57,6 |
| Tomatenpüree | Baumwolle | 78,9 | 77,8 | 78.2 | 79,4 |

## Patentansprüche

1. Waschmittelzubereitung, enthaltend, bezogen auf ihr Gesamtgewicht,
a) Hexosaminidase Zubereitung;
b) 0,5 bis 10 Gew.-% eines polyalkoxylierten Amins mit einem gewichtsmittleren Molekulargewicht M_{w} im Bereich von 600 g/mol bis 10000 g/mol, das erhältlich ist durch Umsetzung von Ammoniak oder primären Alkyl- oder Hydroxyalkylaminen, die ein Molekulargewicht unter 200 g/mol aufweisen, mit Alkylenoxiden.

2. Waschmittelzubereitung nach Anspruch 1, wobei die Waschmittelzubereitung, bezogen auf ihr Gesamtgewicht, 0,01 bis 5 Gew.-%, vorzugsweise 0,1 bis 4 Gew.-% und insbesondere 0,15 bis 2,5 Gew.-% Hexosaminidase Zubereitung enthält.

3. Waschmittelzubereitung nach einem der vorherigen Ansprüche, wobei die Hexosaminidase ausgewählt ist aus der Gruppe der β-Hexosaminidasen.

4. Waschmittelzubereitung nach einem der vorherigen Ansprüche, wobei die Waschmittelzubereitung, bezogen auf ihr Gesamtgewicht, 1 bis 8 Gew.-%, vorzugsweise 3 bis 6 Gew.-% polyalkoxyliertes Amin enthält.

5. Waschmittelzubereitung nach einem der vorherigen Ansprüche, wobei das polyalkoxylierte Amin erhältlich ist durch Umsetzung von Triethanolamin mit Alkenoxiden.

6. Waschmittelzubereitung nach einem der vorherigen Ansprüche, wobei die Waschmittelzubereitung, bezogen auf ihr Gesamtgewicht, 12 bis 30 Gew.-%, vorzugsweise 18 bis 26 Gew.-% anionisches Tensid enthält.

7. Waschmittelzubereitung nach einem der vorherigen Ansprüche, wobei die Waschmittelzubereitung, bezogen auf ihr Gesamtgewicht, 12 bis 30 Gew.-%, vorzugsweise 18 bis 26 Gew.-% nichtionisches Tensid enthält.

8. Waschmittelzubereitung nach einem der vorherigen Ansprüche, wobei die Waschmittelzubereitung nichtionisches Tensid und anionisches Tensid in einem Gewichtsverhältnis von 3:1 bis 1:3, vorzugsweise von 2:1 bis 1:2 und insbesondere von 3:2 bis 2:3 enthält.

9. Waschmittelportionseinheit umfassend
i) eine Waschmittelzubereitung nach einem der Ansprüche 1 bis 8
ii) einen wasserlöslichen Film, welcher die Waschmittelzubereitung vollständig umschließt.

10. Verfahren zur Textilreinigung, bei welchem eine Waschmittelzubereitung nach einem der Ansprüche 1 bis 8 oder eine Waschmittelportionseinheit nach Anspruch 9 in die Waschflotte einer Textilwaschmaschine eingebracht wird.
